# DEMANDE DE BREVET EUROPEEN

(11) **EP 0 922 900 A1**
(43) Date de publication de la demande: **16.06.1999**
(21) Numéro de dépôt: 98402784.7
(22) Date de dépôt: 10.11.1998
(51) Int. Cl.: F16M 11/00

(54) **Structure porte-outils en forme de C.**

(30) Priorité: 14.11.1997 FR 9714319
(71) Demandeur: COMPTOIR COMMERCIAL DE MECANIQUE ET D'OUTILLAGES DE PRECISION C C M O P, 95100 Argenteuil (FR)
(72) Inventeur: Darmon, Michel, 75015 Paris (FR)

(57) **Abrégé**

L'invention concerne une structure porte-outil en forme de C comportant, dans le plan du C, une première branche (B1) transversale centrale, reliée de manière rigide à des deuxième et troisième branches (B2, B3) longitudinales antagonistes, destinées à porter, à distance de la première branche centrale (B1) respectivement un outil (M) et un contre-outil (M'), qui, lorsqu'ils coopèrent, exercent une force, sur une ou plusieurs pièces à traiter entre eux, qui est dirigée suivant une direction (Y) transversale de traitement,

Suivant l'invention, la structure comprend un assemblage en C de barres sensiblement rectilignes comportant chacune, perpendiculaires au plan du C, deux axes d'assemblage parallèles entre eux et à distance l'un de l'autre.

## Description

L'invention concerne une structure porte-outils en forme de C.

Une telle structure comporte habituellement une première branche transversale centrale, reliée de manière rigide à des deuxième et troisième branches longitudinales antagonistes, destinées à porter, à distance de la première branche centrale respectivement un outil et un contre-outil, qui, lorsqu'ils coopèrent, exercent sur une ou plusieurs pièces à traiter entre eux une force, qui est dirigée suivant une direction transversale de traitement.

L'outil et le contre-outil exercent lorsqu'ils coopèrent pour traiter la ou les pièces, des forces de réaction sur les branches antagonistes du C.

Ces forces de réaction exigent que la structure du C soit indéformable.

Par ailleurs, il est souhaité que la structure en forme de C ait une ouverture profonde pour pouvoir traiter des pièces de grande profondeur, telles que des capots ou planchers d'automobiles.

L'ouverture du C doit être suffisamment large pour pouvoir enjamber des raidisseurs prévus sur les pièces.

Ces exigences ont conduit à des structures massives en forme de C, rendant difficile le maniement de celles-ci par un robot, notamment en raison de leur poids trop important.

L'invention vise une structure porte-outils en forme de C, qui satisfasse à ces exigences et qui puisse être maniée aisément par un robot.

L'invention prévoit que la structure comprend un assemblage en C de barres sensiblement rectilignes comportant chacune, perpendiculaires au plan du C, deux axes d'assemblage parallèles entre eux et à distance l'un de l'autre.

On entend par axe d'assemblage, une pièce mécanique de l'assemblage en forme de C, par laquelle une barre est reliée à une autre partie de l'assemblage.

La deuxième branche longitudinale comporte un premier axe d'assemblage, reliant deux première et seconde barres, dont l'une est solidaire de l'outil ou du contre-outil.

La troisième branche longitudinale comporte un second axe d'assemblage, reliant deux troisième et quatrième barres, dont l'une est solidaire du contre-outil ou de l'outil.

Les deuxième et quatrième barres sont plus proches de la profondeur du C que les première et troisième.

Les premier et second axes d'assemblage sont face à face, la droite transversale de traitement interceptant les premier et second axes d'assemblage ou en étant légèrement décalés.

Les barres sont reliées aux autres parties de l'assemblage par leurs axes d'assemblage, de sorte que l'assemblage ait une configuration constante, lorsque l'outil et le contre-outil coopèrent.

Les barres peuvent comporter, comme axes d'assemblage, des chapes reliées aux autres parties de l'assemblage, par un tourillon les traversant.

L'assemblage est tel qu'il permet la transmission et l'encaissement des efforts. Il permet à la structure de garder une configuration constante en l'absence de contraintes excessives.

Les barres supportent les forces de réaction provoquées par l'outil et le contre-outil. Les barres ne travaillent qu'en traction ou en compression à l'exclusion de la flexion.

Sous ces forces, un léger pivotement relatif des barres l'une par rapport à l'autre autour de l'axe d'assemblage par lequel elles sont reliées, est possible.

La structure suivant l'invention permet de réduire les déformations globales linéaires et angulaires du C aux valeurs autorisées par le traitement à effectuer, tout en faisant travailler le matériau au maximum de sa contrainte admissible.

La structure porte-outil en forme de C est ainsi considérablement plus légère, ce qui permet de la manier aisément par un robot.

Les barres sont reliées entre elles par leurs axes d'assemblage.

Les axes d'assemblage se trouvent sur les parties extrêmes des barres.

Les barres forment des triangles dont les sommets sont formés par leurs axes d'assemblage, chaque barre formant un côté d'au moins un triangle.

Dans une réalisation, la structure comprend des troisième, quatrième, cinquième et sixième axes d'assemblage de barres, et des cinquième et sixième barres, la cinquième barre étant reliée respectivement à la première et à la deuxième par les troisième et quatrième axes d'assemblage, la sixième barre étant reliée respectivement à la troisième et la quatrième par les cinquième et sixième axes d'assemblage, les troisième, quatrième, cinquième et sixième axes d'assemblage étant reliés entre eux par des barres.

Dans une réalisation,
- le quatrième axe d'assemblage est relié au sixième par une septième barre,
- le troisième axe d'assemblage est relié au sixième par une douzième barre,
- et le quatrième axe d'assemblage est relié au cinquième par une treizième barre.

Dans une autre réalisation,
- le troisième axe d'assemblage est relié au cinquième par une quatorzième barre,
- le troisième axe d'assemblage est relié au sixième par une douzième barre,
- le quatrième axe d'assemblage est relié au cinquième par une treizième barre.

Dans une autre réalisation :
- le quatrième axe d'assemblage est relié au sixième par une septième barre,
- le troisième axe d'assemblage est relié au sixième par une douzième barre,
- le troisième axe d'assemblage est relié au cinquième par une quatorzième barre.

Dans une autre réalisation :
- le troisième axe d'assemblage est relié au cinquième par une quatorzième barre,
- le quatrième axe d'assemblage est relié au sixième par une septième barre,
- le quatrième axe d'assemblage est relié au cinquième par une treizième barre.

Dans une autre réalisation, la structure comprend des septième, huitième, neuvième, dixième et onzième barres et un septième axe d'assemblage,
la septième barre étant reliée respectivement aux cinquième et sixième barres par les quatrième et sixième axes d'assemblage,
les huitième, neuvième, dixième et onzième barres sont reliées entre elles par le septième axe,
la huitième barre est reliée aux première et cinquième par le troisième axe d'assemblage,
la neuvième barre est reliée aux deuxième, cinquième et septième par le quatrième axe d'assemblage,
la dixième barre est reliée aux troisième et sixième par le cinquième axe d'assemblage,
la onzième barre est reliée aux quatrième, sixième et septième par le sixième axe d'assemblage.

Dans une réalisation, les cinquième, sixième, septième, huitième, neuvième, dixième et onzième barres forment une pièce monobloc.

Dans une réalisation, la structure comporte une pièce intermédiaire monobloc reliée à au moins trois barres par au moins trois de leurs axes d'assemblage, lesdites trois barres étant assemblées, de sorte que les droites passant par leurs axes d'assemblage, convergent en un point.

Dans une réalisation, la structure comporte onze barres reliées, dont :
- des première, deuxième, cinquième sont reliées en un premier triangle,
- des troisième, quatrième, sixième sont reliées en un second triangle,
- des huitième et neuvième sont reliées, de sorte à former un troisième triangle avec la cinquième,
- des dixième et onzième sont reliées, de sorte à former un quatrième triangle avec la sixième,
- une septième est reliée, de sorte à former un cinquième triangle avec la neuvième et la onzième,
- les première, cinquième et huitième barres sont reliées par leurs axes d'assemblage, les plus éloignés des deuxième et neuvième barres, à une première pièce intermédiaire monobloc, les droites reliant les axes d'assemblage des première, cinquième et huitième barres convergeant en un point.

Les septième, neuvième et onzième barres sont en une seule deuxième pièce monobloc, à laquelle sont reliées les huitième et dixième barres par leur axe d'articulation le plus éloigné respectivement des cinquième et sixième barres.

Les troisième, sixième et dixième barres sont reliées par leurs axes d'assemblage, les plus éloignés des onzième et quatrième barres, à une troisième pièce intermédiaire monobloc, les droites reliant les axes d'assemblage des troisième, sixième et dixième barres convergeant en un point.

Dans une réalisation, la septième barre et/ou la droite passant par ses axes d'articulation est sensiblement parallèle à la direction de traitement.

La première et/ou troisième barre comprend une partie tubulaire entre les axes d'assemblage associés, la deuxième et/ou quatrième barre comprend un plat entre les axes d'assemblage associés.

Dans une autre réalisation, la deuxième et/ou quatrième barre comprend une partie tubulaire entre les axes d'assemblage associés, la première et/ou troisième barre comprend un plat entre les axes d'assemblage associés.

Dans une réalisation, la structure est symétrique dans son plan, par rapport au plan médian de l'ouverture du C.

Dans une variante de réalisation, les première et/ou troisième barres sont coudées entre leurs axes d'assemblage associés.

La structure est solidaire d'une pièce permettant sa prise par un robot.

La pièce permet la prise par un robot, soit directement, soit par l'intermédiaire d'un système de détalonnage.

La pièce permettant la prise par un robot est solidaire de la septième barre et/ou de ses axes d'assemblage associés.

La pièce permettant la prise par un robot est solidaire des cinquième à onzième barres monobloc ou de la deuxième pièce monobloc.

La pièce permettant la prise par un robot comprend une plaque monobloc avec les cinquième à onzième barres monobloc ou avec la deuxième pièce monobloc.

La pièce permettant la prise par un robot est munie d'un système de détalonnage.

La plaque comporte deux oreilles articulées chacune à une partie extrême d'une biellette de guidage de détalonnage, les autres parties extrêmes des biellettes étant articulées à un support, les biellettes et le support étant tels qu'ils permettent un déplacement du C suivant la direction d'usinage, un vérin de commande de détalonnage, solidaire du support ou prenant appui sur celui-ci, étant relié à la plaque.

La première barre comprend deux premier et second tubes, reliés avec possibilité de rotation par leurs premières parties extrêmes au premier axe d'assemblage et au troisième axe d'assemblage et articulés, l'un à l'autre par leurs secondes parties extrêmes, suivant un axe d'articulation sensiblement parallèle aux axes d'assemblage, la première barre pouvant se trouver dans une position de blocage, dans laquelle la rotation d'un tube par rapport à l'autre autour de l'axe d'articulation est empêchée et les tubes sont alignés, et dans une position de déblocage dans laquelle cette rotation est rendue possible, la rotation de la deuxième barre autour du quatrième axe d'assemblage étant possible. L'effet de ce système est d'écarter les branches longitudinales du C pour augmenter l'ouverture de la structure.

Un manchon est monté coulissant sur les premier et second tubes, le manchon étant :
* en position de blocage, emmanché sur l'axe d'articulation sur les premier et second tubes alignés,
* en position de déblocage, emmanché sur un seul des premier et second tubes,

le passage du manchon entre ces deux états étant rendu possible par des moyens pour déplacer le manchon par rapport audit tube.

Lesdits moyens de déplacement du manchon comprennent un vérin annulaire entourant ledit un des tubes, le manchon coulissant ayant la fonction d'un piston pour le vérin annulaire.

Les secondes parties extrêmes des premier et second tubes comportent un prolongement vers la deuxième barre, sur lequel se trouve l'axe d'articulation.

La structure comporte un moyen pour faire tourner, en position de déblocage, les premier et second tubes autour de l'axe d'articulation.

Les moyens de rotation comprennent un vérin relié d'une part au quatrième axe d'assemblage et d'autre part au second tube.

Dans une réalisation, le vérin est relié à un prolongement issu du troisième axe d'assemblage, distinct du second tube et se trouvant entre le second tube et le quatrième axe d'assemblage.

Dans une réalisation sans manchon, l'axe d'articulation des deux tubes est écarté de la ligne des premier et troisième axes, ce qui dispense du manchon de blocage, lorsque les tubes sont sollicités en compression.

L'invention sera bien comprise à la lecture de la description détaillée qui suit, en référence aux dessins annexés, donnés à titre d'exemples non limitatifs.
La figure 1 est une vue de côté de la structure porte-outil en forme de C, dans une première réalisation ;
la figure 2 est vue de côté de la structure porte-outil en forme de C, avec une pièce permettant la prise par un robot ;
La figure 3 est une vue de côté de la structure porte-outil en forme de C, dans une deuxième réalisation ;
La figure 4 est vue de côté de la structure porte-outil en forme de C, dans une troisième réalisation ;
La figure 5 est une vue de côté d'un système de détalonnage de la structure porte-outil en C ;
La figure 6 est une vue de côté d'un système, monté sur le C, pour écarter l'une de l'autre les branches longitudinales du C, en position de blocage ;
La figure 7 est une vue de côté du système en position écartée ;
La figure 8 est une vue de côté d'une variante au système d'écartement des branches du C ;
La figure 9 représente une variante d'une branche du C, avec barre coudée ;
Les figures 10 à 13 représentent des variantes de l'assemblage de barres d'une structure porte-outil en forme de C.

L'invention est décrite en référence à une structure portant un outil M et un contre-outil M' destinés à l'usinage d'une ou de plusieurs pièces.

Le traitement comprend par exemple le soudage, rivetage, clinchage ,emboutissage, perçage, pliage, ou découpage de la ou des pièces, ou arrachement.

La ou les pièces est ou sont par exemple métalliques. Elles comprennent par exemple une tôle devant être traitée, par exemple pour un capot de véhicule automobile.

Pour le traitement, la ou les pièces à traiter se trouve entre l'outil M et le contre-outil M'.

La structure est décrite en référence à une direction X longitudinale et à une direction Y transversale perpendiculaire à celle-ci.

La structure porte-outils est en forme de C, comportant une première branche centrale transversale B1 et, montées sur celles-ci, une deuxième branche longitudinale B2 et une troisième branche longitudinale B3, antagoniste de la deuxième B2.

La première branche B1 délimite longitudinalement d'un côté la profondeur du creux O du C. Les deuxième et troisième branches B2, B3 délimitent transversalement des deux côtés l'ouverture du creux O du C.

L'outil M et le contre-outil M' sont montés respectivement sur les branches longitudinales B2 et B3 du C, en étant dirigés vers le creux O, par exemple sur les parties extrêmes de celles-ci.

Pour le traitement, la pièce ou les pièces non représentée, se trouve dans le creux O, entre l'outil M et le contre-outil M'.

Ceux-ci exercent une force dirigée suivant la direction transversale Y.

Dans les réalisations représentées, l'outil M et le contre-outil M' sont face à face transversalement et exercent une force suivant une même droite transversale sur la pièce.

Dans d'autres réalisations, non représentées, l'outil et le contre-outil peuvent être légèrement décalés par rapport à la ligne des premiers et seconds axes d'assemblage.

Dans les réalisations représentées, les axes d'assemblage se trouvent sur les parties extrêmes des barres.

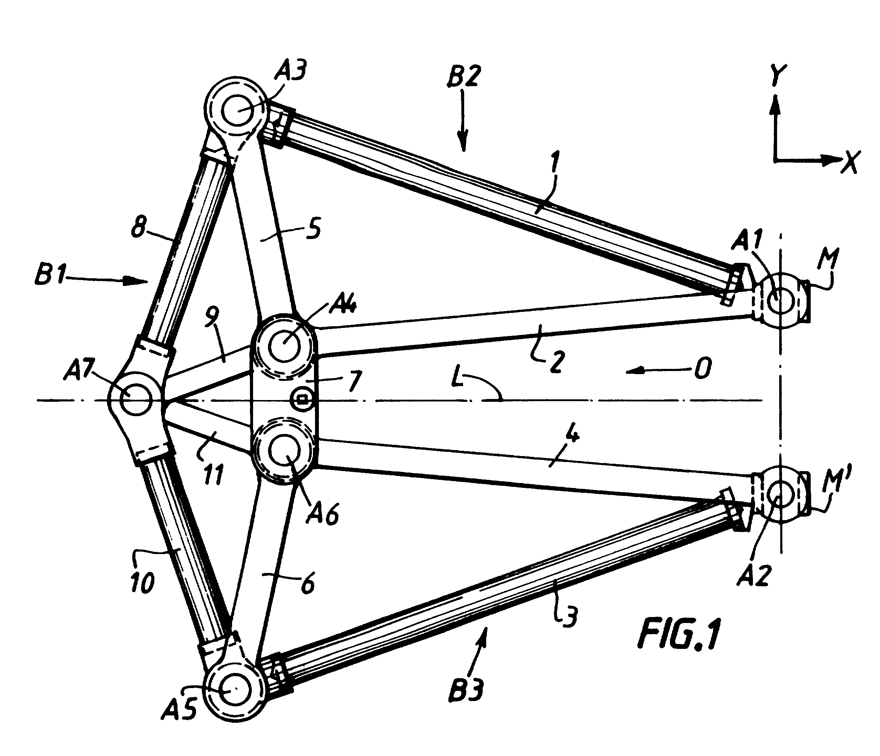

A la figure 1, les barres sont reliées entre elles directement par leurs axes d'assemblage, les tourillons étant communs à plusieurs chapes.

Les barres forment des triangles dont les sommets sont formés par leurs axes d'assemblage, chaque barre formant un côté d'au moins un triangle.

La deuxième branche B2 longitudinale comprend un premier axe Al d'assemblage, reliant deux première et seconde barres 1, 2, dont l'une est solidaire de l'outil M, la deuxième barre 2 étant plus proche de l'ouverture O du C que la première 1.

Dans les réalisations représentées, l'outil M est solidaire de la première barre 1.

Dans une autre réalisation, non représentée, l'outil est solidaire de la deuxième barre 2.

La troisième branche longitudinale B3 comporte un deuxième axe A2 d'assemblage, reliant deux troisième et quatrième barres 3, 4, dont l'une est solidaire du contre-outil M', la quatrième barre 4 étant plus proche de l'ouverture O du C que la troisième 3.

Dans la réalisation représentée, le contre-outil M' est solidaire de la troisième barre 3.

Dans une autre réalisation, non représentée, le contre-outil est solidaire de la quatrième barre 4.

Les premier et deuxième axes d'assemblage A1, A2 sont face à face transversalement, la droite transversale Y d'usinage interceptant les premier et deuxième axes A1, A2.

La structure porte-outil en forme de C comprend des troisième, quatrième, cinquième, sixième et septième axes A3 à A7 d'assemblage de barres et des cinquième, sixième, septième, huitième, neuvième, dixième et onzième barres 5 à 11.

La cinquième barre 5 est reliée respectivement à la première 1 et à la deuxième 2 par les troisième et quatrième axes d'assemblage A3, A4.

La sixième barre 6 est reliée respectivement à la troisième 3 et à la quatrième 4 par les cinquième et sixième axes A5, A6 d'assemblage.

La septième barre 7 est reliée respectivement aux cinquième et sixième barres 5, 6 par les quatrième et sixième axes d'assemblage A4, A6.

Les huitième et neuvième barres 8, 9 sont reliées d'une part entre elles par le septième axe A7 d'assemblage et d'autre part à la cinquième barre 5 et respectivement aux première et deuxième barres 1, 2 par les troisième et quatrième axes 3, 4 d'assemblage.

La septième barre 7 est située, vue dans la direction longitudinale X, entre le septième axe A7 d'assemblage et l'ouverture O du C.

Les dixième et onzième barres 10, 11 sont reliées d'une part entre elles et aux huitième et neuvième barres 8, 9 par le septième axe A7 d'assemblage et d'autre part à la sixième barre 6 et respectivement aux troisième et quatrième barres 3, 4 par les cinquième et sixième axes A5, A6 d'assemblage.

La première et/ou troisième barres comprend une partie tubulaire entre les axes d'assemblage associés, la deuxième et/ou quatrième barres comprend un plat entre les axes d'assemblage associés.

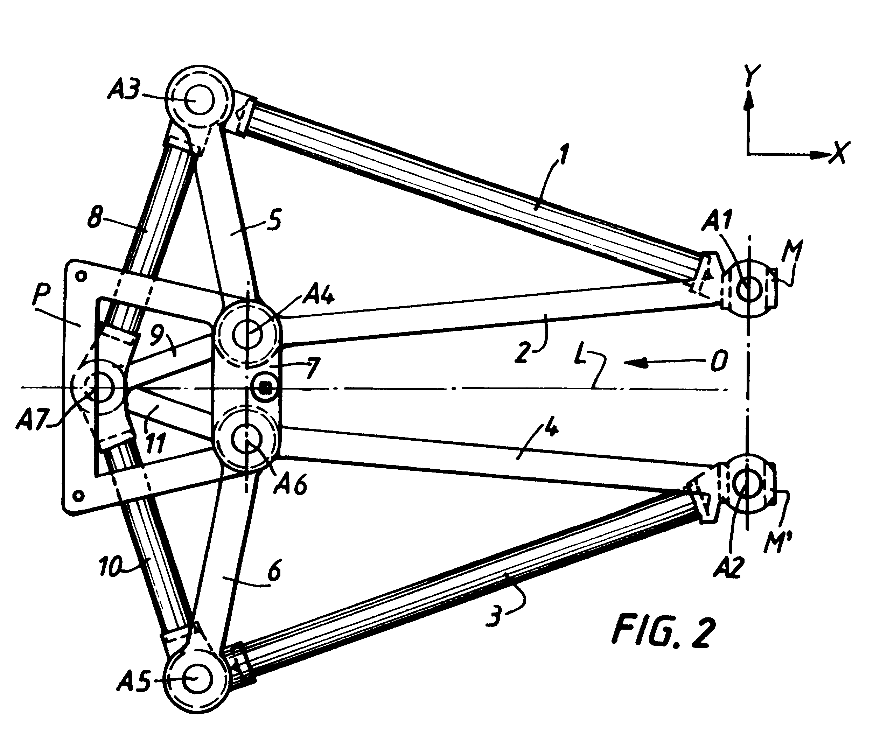

Dans la réalisation représentée à la figure 2, la septième barre 7 est reliée par ses quatrième et sixième axes d'assemblage A4, A6, à une pièce P de prise du C, destinée à être tenue par un robot, non représenté.

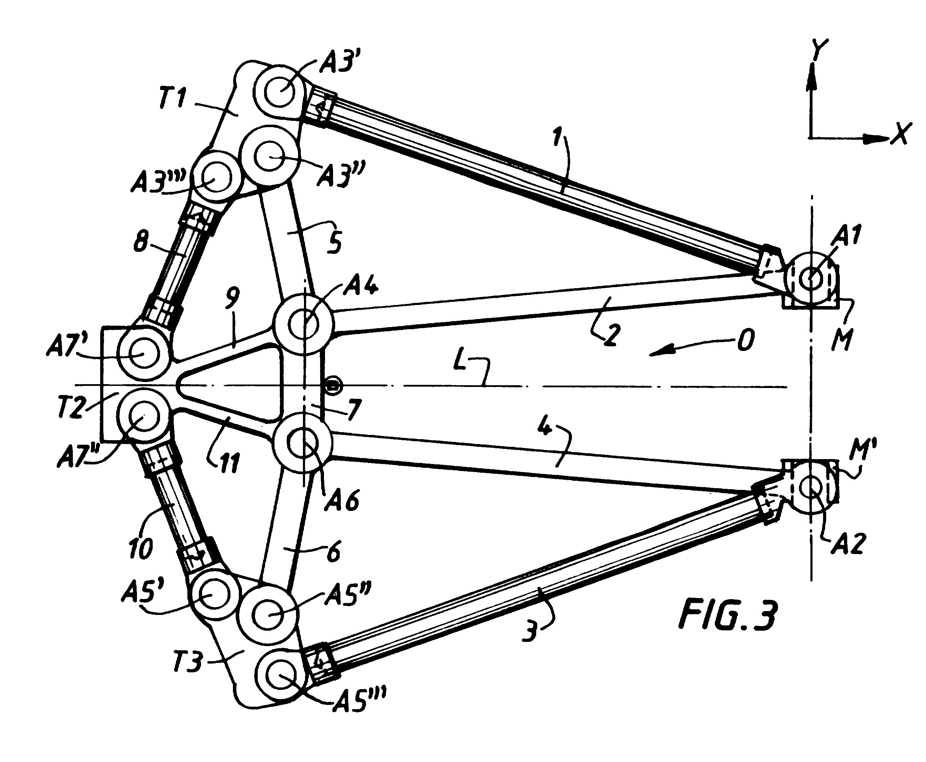

Dans la réalisation représentée à la figure 3, la barre 1 est reliée d'une part par le premier axe A1 d'assemblage à la deuxième barre 2 et d'autre part par un premier axe A3' d'assemblage intermédiaire à une première pièce intermédiaire T1 d'assemblage monobloc pleine.

La cinquième barre 5 est reliée d'une part par le quatrième axe A4 d'assemblage à la deuxième barre 2 et à la neuvième barre 9 et d'autre part par un deuxième axe A3" d'assemblage intermédiaire à la première pièce T1 d'assemblage intermédiaire.

Les septième, neuvième et onzième barres 7, 9, 11 sont en une deuxième pièce monobloc T2 triangulaire.

La deuxième pièce monobloc T2 est reliée aux deuxième et cinquième barres par le quatrième axe A4 d'assemblage, et aux quatrième et sixième barres 4, 6 par le sixième axe A6 d'assemblage.

La huitième barre 8 est reliée d'une part par un troisième axe A3" d'assemblage intermédiaire à la première pièce T1 d'assemblage intermédiaire et d'autre part par un quatrième axe A7' d'assemblage intermédiaire à la deuxième pièce monobloc T2.

La dixième barre 10 est reliée d'une part par un cinquième axe A7" d'assemblage intermédiaire à la deuxième pièce T2 monobloc et d'autre part par un sixième axe A5' d'assemblage intermédiaire à une troisième pièce T3 d'assemblage monobloc intermédiaire pleine.

Les quatrième et cinquième axes A7', A7" d'assemblage intermédiaires sont face à face transversalement.

La septième barre A7 est située, vue dans la direction longitudinale X, entre les quatrième et cinquième axes A7', A7" d'assemblage intermédiaires et l'ouverture O du C.

La sixième barre 6 est reliée d'une part à la deuxième pièce monobloc T2 par le sixième axe A6 d'assemblage et d'autre part par un septième axe A5" d'assemblage intermédiaire à la troisième pièce T3 d'assemblage intermédiaire.

La troisième barre 3 est reliée d'une part par le deuxième axe A2 d'assemblage à la quatrième barre 4 et d'autre part par un huitième axe A5''' d'assemblage intermédiaire à la troisième pièce T3 d'assemblage intermédiaire.

Les droites du plan XY passant par les axes respectivement A7', A3''' ; A4, A3" ; A1, A3' convergent en un point.

Les droites du plan XY passant respectivement par les axes d'assemblage A7", A5' ; A6, A5" ; A2, A5''', convergent en un point.

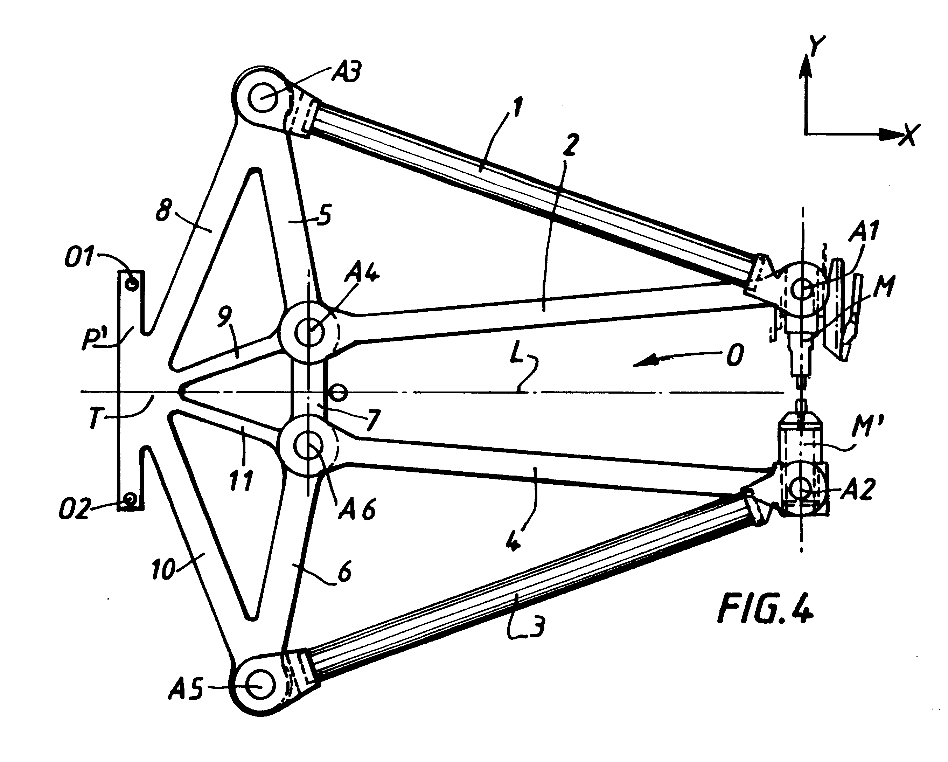

Dans la réalisation représentée à la figure 4, les cinquième, sixième, septième, huitième, neuvième, dixième et onzième barres 5 à 11 sont monobloc et forment une pièce T.

La pièce T est reliée à la première barre 1 par le troisième axe A3 d'assemblage et à la deuxième barre 2 par le quatrième axe A4 d'assemblage, les premières et deuxièmes barres 1,2 étant reliées par le premier axe A1 d'assemblage.

La pièce T est reliée à la troisième barre 3 par le cinquième axe A5 d'assemblage et à la quatrième barre 4 par le sixième axe A6 d'assemblage, la troisième barre 3 et la quatrième barre 4 étant reliées par le deuxième axe A2 d'assemblage.

Dans cette réalisation, on se dispense du septième axe A7 d'assemblage et des premières et troisième pièces T1, T3 d'assemblage intermédiaire.

La pièce T monobloc comporte, sur sa partie éloignée de l'ouverture O du C une plaque P' s'étendant sensiblement transversalement comportant, à chacune de ses deux parties extrêmes transversalement, une oreille O1, respectivement O2. Les oreilles O1, O2 permettent la préhension de la structure en forme de C par un robot.

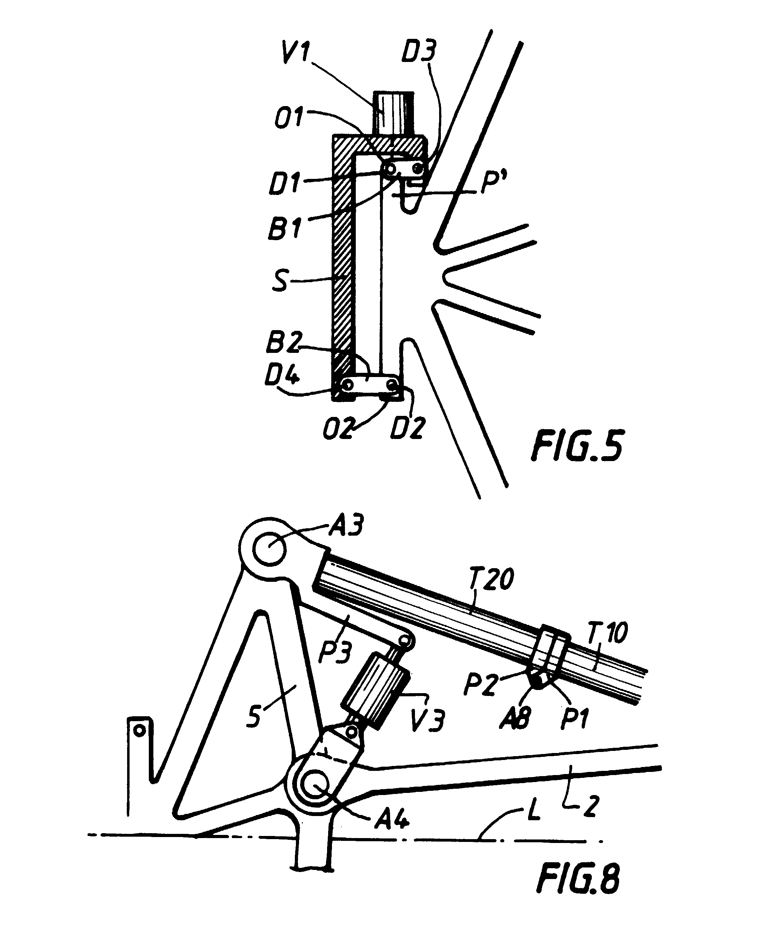

Dans la réalisation représentée à la figure 5, la plaque P' est reliée respectivement par ses premières et secondes oreilles O1, O2 à une première et à une seconde biellettes B1, B2, de manière articulée autour de premiers et seconds axes, D1, D2 de rotation.

Les premières et secondes biellettes B1, B2 sont reliées de manière articulée, par l'intermédiaire de troisième et quatrième axes D3, D4 de rotation à un support S.

Le support S a une forme de J retourné dont les deux parties extrêmes reçoivent respectivement les troisièmes et quatrièmes axes D3, D4 de rotation.

Le support S comporte, sur sa partie centrale, reliant entre elles ses deux parties extrêmes, un vérin V1 de détalonnage, comportant une tige transversale traversant la partie centrale du support en J et reliée à la plaque P'.

Le système de détalonnage comprenant le support S, les premier à quatrième axes de rotation D1 à D4, les première et deuxième biellettes B1, B2 et le vérin V1 est tel qu'il permet un déplacement du C suivant la direction transversale, par déplacement de la tige du vérin suivant la direction transversale et rotation des premières et deuxièmes biellettes B1, B2 autour des axes D1 à D4 de rotation. A cet effet, on peut se reporter à l'ouvrage MOTION GEOMETRY OF MECANISMS, par DIJKSMAN, EDITIONS CAMBRIDGE, CAMBRIDGE UNIVERSITY PRESS, 0-521-20 841-6. Le cercle des inflexions est dégénéré en une droite passant par le contre-outil.

Le système de détalonnage permet de translater la structure porte-outils en forme de C d'environ 8 mm vers le bas pour, si nécessaire, dégager les pièces prisonnières du contre-outil.

Dans une autre réalisation, non représentée, le système de détalonnage comporte des glissières de guidage de détalonnage et un vérin de commande de détalonnage.

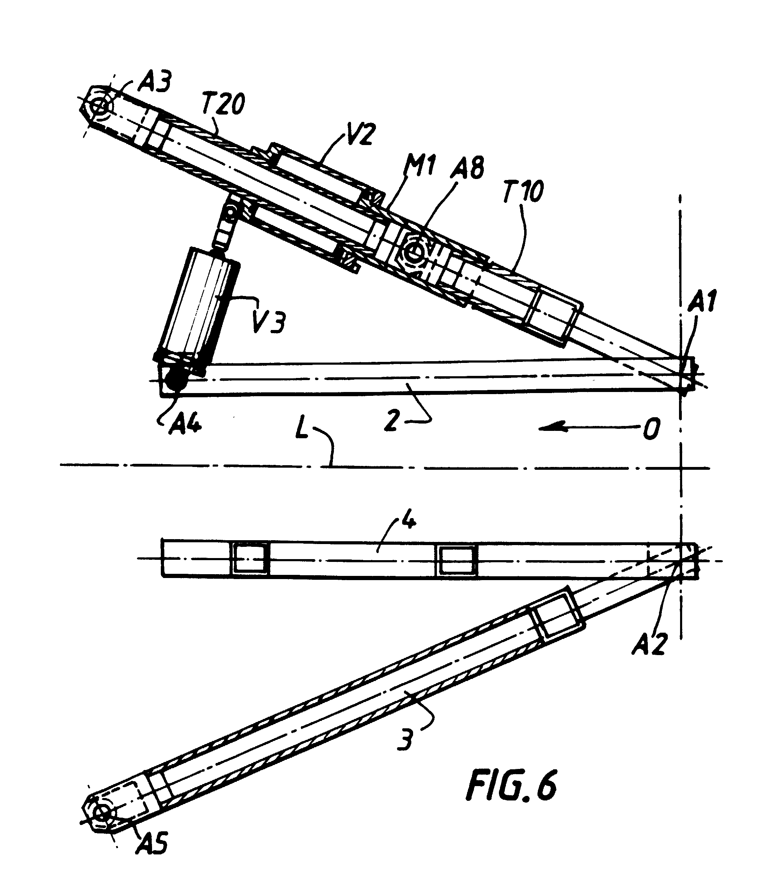

Dans les réalisations représentées aux figures 6 à 8, la première barre 1 comprend deux premier et deuxième tubes T10, T20, reliés avec possibilité de rotation par leurs premières parties extrêmes au premier axe Al d'assemblage et au troisième axe A3 d'assemblage et articulés l'un à l'autre, par leurs deuxièmes parties extrêmes, suivant un axe A8 d'articulation sensiblement parallèle aux axes d'assemblage A1, A3.

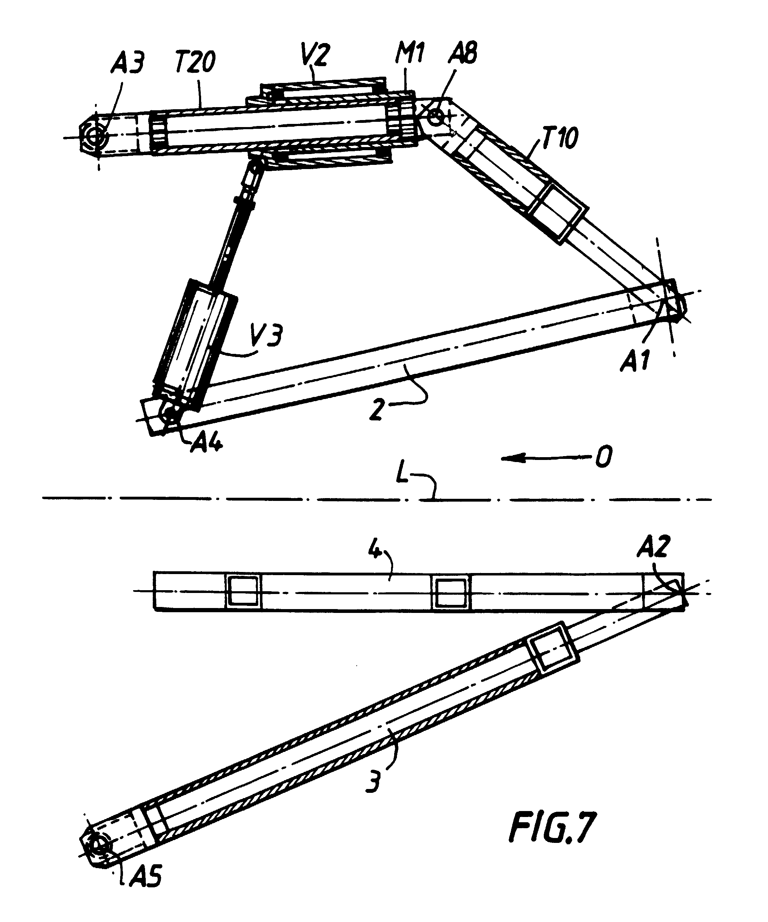

Dans la réalisation représentée aux figures 6 et 7, un manchon M1 est monté coulissant sur les premiers et seconds tubes T10, T20.

Dans une position de blocage, dans laquelle la rotation des premiers et seconds tubes T10, T20 l'un par rapport à l'autre autour de l'axe A8 d'articulation est empêchée, le manchon M1 est emmanché sur les secondes parties extrêmes des premiers et seconds tubes T10, T20, de part et d'autre de l'axe A8 d'articulation.

Dans une position de déblocage, dans laquelle cette rotation est rendue possible, le manchon M1 est emmanché sur un seul des premier et second tubes, par exemple sur le second tube T20.

Le passage du manchon M1 entre ces deux positions est rendu possible par des moyens pour déplacer le manchon par rapport au second tube T20.

Ces moyens de déplacement du manchon comprennent un vérin V2 annulaire entourant une partie du tube T20, le manchon M1 coulissant ayant la fonction d'un piston pour le vérin V2 annulaire.

Il est prévu un moyen pour faire tourner, en position de déblocage, les premiers et second tubes T10, T20 autour de l'axe A8 d'articulation. Les moyens de rotation comprennent un vérin V3 relié d'une part à l'axe de rotation A4 et d'autre part au second tube T20.

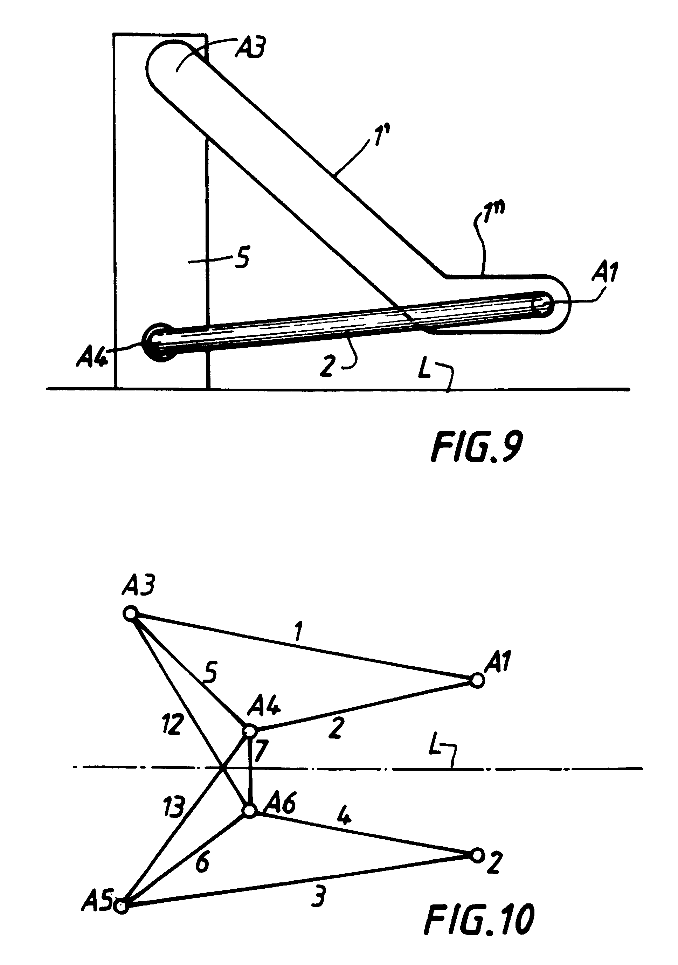

Dans la réalisation représentée à la figure 8, les secondes parties extrêmes des premier et second tubes T10, T20 comportent chacune un prolongement P1, P2 vers la deuxième barre 2, sur lequel se trouve l'axe A8 d'articulation.

Dans toutes les réalisations, l'axe de rotation du vérin V3 est l'axe A4 d'articulation.

Le vérin V3 est relié à un autre prolongement P3 issu du troisième axe A3 d'assemblage, distinct du second tube T20 et se trouvant entre le second tube T20 et le quatrième axe A4 d'assemblage.

Cette réalisation permet de se dispenser du manchon.

Les réalisations représentées aux figures 6 à 8 permettent, lorsque l'outil et le contre-outil ne coopèrent pas, de déplacer les deuxièmes et troisièmes branches B2, B3 longitudinales du C l'une par rapport à l'autre, par exemple pour enjamber un raidisseur présent sur la ou les pièces à traiter.

Le déplacement s'effectue par rotation de la deuxième barre 2 autour du quatrième axe A4 d'assemblage.

Dans la réalisation représentée à la figure 9, la barre 3 rectiligne est remplacée par une barre coudée comportant deux parties rectilignes 1', 1" reliées entre elles par un coude et d'autre part, par leurs parties extrêmes éloignées du coude au deuxième axe A2 d'assemblage et au premier axe A1 d'assemblage.

Le coude est dirigé vers l'ouverture O de la structure en forme de C.

La partie 1" est sensiblement parallèle à la deuxième barre 2, au-dessous ou au-dessus de celle-ci.

La barre coudée 1', 1" permet d'introduire la structure porte-outils en forme de C dans un espace exigu au prix d'une déformation en flexion de la barre coudée, lorsque l'outil et le contre-outil coopèrent.

Dans les réalisations représentées, la structure porte-outils en forme de C est symétrique par rapport à un plan longitudinal L médian de l'ouverture O du C.

Dans la réalisation représentée à la figure 10, le quatrième axe d'assemblage est relié au sixième A6 par une septième barre 7, le troisième axe A3 d'assemblage est relié au sixième A6 par une douzième barre 12, et le quatrième axe A4 d'assemblage est relié au cinquième A5 par une treizième barre 13.

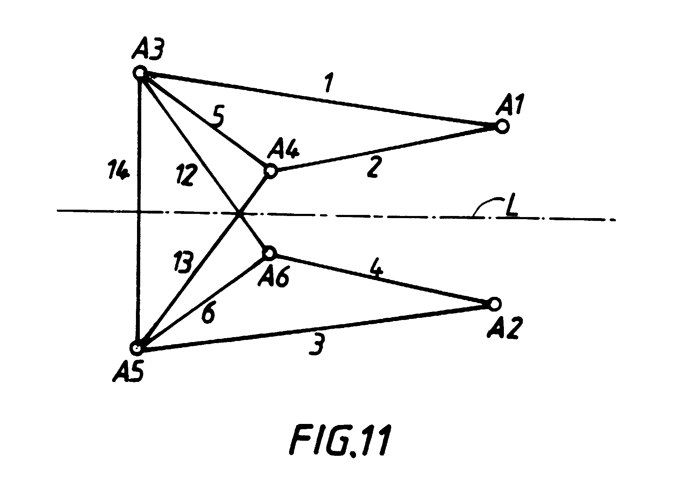

Dans la réalisation représentée à la figure 11, le troisième axe A3 d'assemblage est relié au cinquième A5 par une quatorzième barre 14, le troisième axe A3 d'assemblage est relié au sixième A6 par une douzième barre 12, le quatrième axe A4 d'assemblage est relié au cinquième A5 par une treizième barre 13.

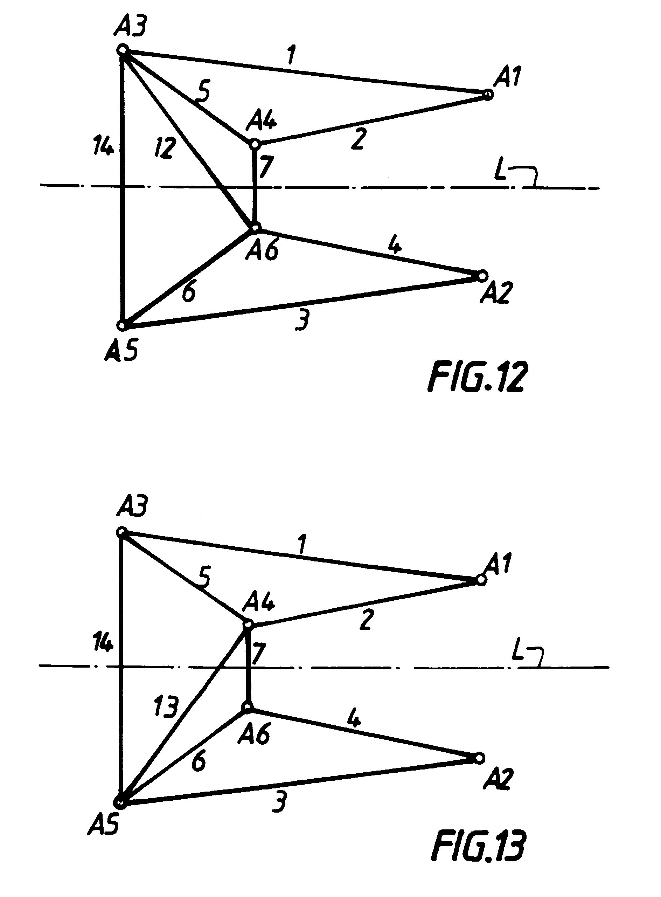

Dans la réalisation représentée à la figure 12, le quatrième axe A4 d'assemblage est relié au sixième A6 par une septième barre 7, le troisième axe A3 d'assemblage est relié au sixième A6 par une douzième barre 12, le troisième axe A3 d'assemblage est relié au cinquième A5 par une quatorzième barre 14.

Dans la réalisation représentée à la figure 13, le troisième axe A3 d'assemblage est relié au cinquième A5 par une quatorzième barre 14, le quatrième axe A4 d'assemblage est relié au sixième A6 par une septième barre 7, le quatrième axe A4 d'assemblage est relié au cinquième A5 par une treizième barre 13.

## Revendications

1. Structure porte-outil en forme de C comportant, dans le plan du C, une première branche (B1) transversale centrale, reliée de manière rigide à des deuxième et troisième branches (B2, B3) longitudinales antagonistes, destinées à porter, à distance de la première branche centrale (B1) respectivement un outil (M) et un contre-outil (M'), qui, lorsqu'ils coopèrent, exercent une force, sur une ou plusieurs pièces à traiter entre eux, qui est dirigée suivant une direction (Y) transversale de traitement,
caractérisée en ce qu'elle comprend un assemblage en C de barres sensiblement rectilignes comportant chacune, perpendiculaires au plan du C, deux axes d'assemblage parallèles entre eux et à distance l'un de l'autre,
la deuxième branche (B2) longitudinale comportant un premier axe (A1) d'assemblage, reliant deux première et seconde barres (1, 2), dont l'une est solidaire de l'outil (M) ou du contre-outil (M'),
la troisième branche (B3) longitudinale comportant un second axe (A2) d'assemblage, reliant deux troisième et quatrième barres (3, 4), dont l'une est solidaire du contre-outil (M') ou de l'outil (M),
les premier et second axes d'assemblage (A1, A2) étant face à face, la droite transversale (Y) de traitement interceptant les premier et second axes d'assemblage (A1, A2) ou passant près de ceux-ci,
les barres étant reliées aux autres parties de l'assemblage par leurs axes d'assemblage, de sorte que l'assemblage ait une configuration constante, lorsque l'outil et le contre-outil coopèrent.

2. Structure selon la revendication 1, caractérisé en ce que les barres sont reliées entre elles par leurs axes d'assemblage, et les axes d'assemblage se trouvent sur les parties extrêmes des barres.

3. Structure selon la revendication 1 ou 2, caractérisée en ce que les barres forment des triangles dont les sommets sont formés par leurs axes d'assemblage, chaque barre formant un côté d'au moins un triangle.

4. Structure selon la revendication 3, caractérisée en ce qu'elle comprend des troisième, quatrième, cinquième et sixième axes (A3, A4, A5, A6) d'assemblage de barres, et des cinquième et sixième barres (5, 6),
la cinquième barre (5) étant reliée respectivement à la première (1) et à la deuxième (2) par les troisième et quatrième axes d'assemblage (A3, A4),
la sixième barre (6) étant reliée respectivement à la troisième (3) et la quatrième (4) par les cinquième et sixième axes (A5, A6) d'assemblage, les troisième, quatrième, cinquième et sixième axes d'assemblage étant reliés entre eux par des barres,
les deuxième et quatrième barres (2, 4) étant plus proches de la profondeur du C que les première et troisième (1,3).

5. Structure selon la revendication 4, caractérisée en ce que :
- le quatrième axe (A4) d'assemblage est relié au sixième (A6) par une septième barre (7),
- le troisième axe (A3) d'assemblage est relié au sixième (A6) par une douzième barre (12),
- le troisième axe (A3) d'assemblage est relié au cinquième (A5) par une quatorzième barre (14).

6. Structure selon la revendication 4, caractérisée en ce qu'elle comprend des septième, huitième, neuvième, dixième et onzième barres (7, 8, 9, 10, 11) et un septième axe (A7) d'assemblage,
la septième barre (7) étant reliée respectivement aux cinquième et sixième barres (5, 6) par les quatrième et sixième axes d'assemblage (A4, A6),
les huitième, neuvième, dixième et onzième barres (8 à 11) sont reliées entre elles par le septième axe (A7),
la huitième barre (8) est reliée aux première (1) et cinquième (5) par le troisième axe (A3) d'assemblage,
la neuvième barre (9) est reliée aux deuxième (2), cinquième (5) et septième (7) par le quatrième axe (A4) d'assemblage,
la dixième barre (10) est reliée aux troisième (3) et sixième (6) par le cinquième axe (A5) d'assemblage,
la onzième barre (11) est reliée aux quatrième (4), sixième (6) et septième (7) par le sixième axe (A6) d'assemblage.

7. Structure selon la revendication 6, caractérisée en ce que les cinquième, sixième, septième, huitième, neuvième, dixième et onzième barres (5 à 11) forment une pièce monobloc (T).

8. Structure selon l'une quelconque des revendications 1 à 4, caractérisée en ce qu'elle comporte une pièce intermédiaire monobloc (T1, T3) reliée à au moins trois barres d'assemblage par au moins trois de leurs axes d'assemblage, lesdites trois barres étant assemblées, de sorte que les droites passant par leurs axes d'assemblage convergent en un point.

9. Structure selon la revendication 8, caractérisée en ce qu'elle comporte onze barres (1 à 11) reliées, dont :
- des première (1), deuxième (2), cinquième (5) sont reliées en un premier triangle,
- des troisième (3), quatrième (4), sixième (6) sont reliées en un second triangle,
- des huitième (8) et neuvième (9) sont reliées, de sorte à former un troisième triangle avec la cinquième (5),
- des dixième (10) et onzième (11) sont reliées, de sorte à former un quatrième triangle avec la sixième,
- une septième (7) est reliée, de sorte à former un cinquième triangle avec la neuvième (9) et la onzième (11),
- les première, cinquième et huitième barres (1, 5, 8) sont reliées par leurs axes d'assemblage, les plus éloignés des deuxième et neuvième barres (2, 9), à une première pièce intermédiaire monobloc (T1), les droites reliant les axes d'assemblage des première, cinquième et huitième barres (1, 5, 8) convergeant en un point.

10. Structure selon la revendication 9, caractérisée en ce que les septième, neuvième et onzième barres (7, 9, 11) sont en une seule deuxième pièce monobloc (T2), à laquelle sont reliées les huitième et dixième barres (8, 10) par leur axe d'articulation le plus éloigné respectivement des cinquième et sixième barres (5, 6), les droites reliant les axes d'assemblage des huitième et dixième barres (8 et 10) convergeant en un point avec les neuvième et onzième barre (9,11).

11. Structure selon l'une quelconque des revendications 5 à 10, caractérisée en ce que la septième barre (7) et/ou la droite passant par ses axes d'articulation (A4, A6) est sensiblement parallèle à la direction d'usinage (Y).

12. Structure selon l'une quelconque des revendications précédentes, caractérisée en ce que la première et/ou troisième barre (1, 3) comprend une partie tubulaire entre les axes d'assemblage associés, la deuxième et/ou quatrième barre (2, 4) comprend un plat entre les axes d'assemblage associés.

13. Structure selon l'une quelconque des revendications 1 à 11, caractérisée en ce que la deuxième et/ou la quatrième barre (2,4) comprend une partie tubulaire entre les axes d'assemblage associés, la première et/ou troisième barre (1,3) comprend un plat entre les axes d'assemblage associés.

14. Structure selon l'une quelconque des revendications précédentes, caractérisée en ce qu'elle est symétrique dans son plan, par rapport au plan (L) médian de l'ouverture (O) du C.

15. Structure selon l'une quelconque des revendications précédentes, caractérisée en ce que les première et/ou troisième barres (1, 3) sont coudées entre leurs axes d'assemblage associés.

16. Structure selon l'une quelconque des revendications précédentes, caractérisée en ce qu'elle est solidaire d'une pièce (P, P') permettant sa prise par un robot.

17. Structure suivant l'une ou plusieurs des revendications 7, 10 et 16, caractérisée en ce que la pièce (P) permettant la prise par un robot est solidaire de la septième barre (7) et/ou de ses axes (A4, A6) d'assemblage associés, et/ou des cinquième à onzième barres (5 à 11) monobloc (T) ou de la deuxième pièce monobloc (T2).

18. Structure selon la revendication 16, caractérisée en ce que la pièce (T) permettant la prise par un robot comprend une plaque (P') monobloc avec les cinquième à onzième barres monobloc (T) ou avec la deuxième pièce monobloc (T2).

19. Structure selon la revendication 18, caractérisée en ce que la plaque est munie d'un système de détalonnage, la plaque (P') comporte deux oreilles (01, 02) articulées chacune à une partie extrême d'une biellette (B1, B2) de guidage de détalonnage, les autres parties extrêmes des biellettes (B1, B2) étant articulées à un support (S), les biellettes (B1, B2) et le support (S) étant tels qu'ils permettent un déplacement du C suivant la direction (Y) d'usinage, un vérin (V1) de commande de détalonnage, solidaire du support (S) ou prenant appui sur celui-ci, étant relié à la plaque (P').

20. Structure selon l'une quelconque des revendications précédentes, caractérisée en ce que la première barre (1) comprend deux premier et second tubes (T10, T20), reliés avec possibilité de rotation par leurs premières parties extrêmes au premier axe (Al) d'assemblage et au troisième axe (A3) d'assemblage et articulés, l'un à l'autre par leurs secondes parties extrêmes, suivant un axe (A8) d'articulation sensiblement parallèle aux axes d'assemblage (A1, A3), la première barre (1) pouvant se trouver dans une position de blocage, dans laquelle la rotation d'un tube par rapport à l'autre autour de l'axe (A8) d'articulation est empêchée et les tubes sont alignés, et dans une position de déblocage dans laquelle cette rotation est rendue possible, la rotation de la deuxième barre (2) autour du quatrième axe (A4) d'assemblage étant possible, la structure comporte un vérin (V3) relié d'une part au quatrième axe d'assemblage (A4) et d'autre part au tube (T20), et destiné à faire tourner, en position de déblocage, les premier et second tubes (T10, T20) l'un par rapport à l'autre autour de l'axe (A8) d'articulation.

21. Structure selon la revendication 20, caractérisée en ce qu'un manchon (M1) est monté coulissant sur les premier et second tubes (T10, T20), le manchon étant :
* en position de blocage, emmanché sur l'axe d'articulation sur les premier et second tubes (T10, T20) alignés,
* en position de déblocage, emmanché sur un seul (T20) des premier et second tubes,
le passage du manchon entre ces deux états étant rendu possible par un vérin (V2) annulaire entourant ledit un des tubes (T20), pour déplacer le manchon par rapport audit tube (T20).

22. Structure selon la revendication 20 ou 21, caractérisée en ce que les secondes parties extrêmes (P1, P2) des premier et second tubes (T10, T20) comportent un prolongement (P1, P2) vers la deuxième barre (2), sur lequel se trouve l'axe (A8) d'articulation.

23. Structure selon la revendication 20, 21 ou 22, caractérisée en ce que le vérin (V3) est relié à un prolongement (P3) issu du troisième axe (A3) d'assemblage, distinct du tube (T20) et se trouvant entre le tube (T20) et le quatrième axe (A4) d'assemblage.
